# EUROPEAN PATENT SPECIFICATION

(11) **EP 2 339 782 B1**
(45) Date of publication and mention of the grant of the patent: **17.12.2014**
(21) Application number: 09814025.4
(22) Date of filing: 01.09.2009
(51) Int. Cl.: H04L 12/18, H04L 29/08, G06Q 30/02

(54) **ADVERTISEMENT OBTAINING METHOD, SYSTEM, ADVERTISEMENT CLIENT AND ADVERTISEMENT SERVER**
WERBUNGSGEWINNUNGSVERFAHREN, SYSTEM, WERBE-CLIENT UND WERBE-SERVER
PROCÉDÉ D OBTENTION DE PUBLICITÉS, SYSTÈME, CLIENT DE PUBLICITÉS ET SERVEUR DE PUBLICITÉS

(30) Priority: 22.09.2008 CN 200810222700
(43) Date of publication of application: 29.06.2011
(73) Proprietor: Huawei Technologies Co., Ltd., Longgang District, Shenzhen Guangdong 518129 (CN)
(72) Inventor: TAN, Yinyan Huawei Technologies Co.Ltd., Int.Prop.Dept., Shenzhen (CN); SHAO, Gang Huawei Technologies Co.Ltd., Int.Prop.Dept., Shenzhen (CN); LI, Kepeng Huawei Technologies Co.Ltd., Int.Prop.Dept., Shenzhen (CN); ZHONG, Jieping Huawei Technologies Co.Ltd., Int.Prop.Dept., Shenzhen (CN); ZHAN, Jinjing Huawei Technologies Co.Ltd., Int.Prop.Dept., Shenzhen (CN)
(74) Representative: Goddar, Heinz J.
(86) International application number: PCT/CN2009/073656
(87) International publication number: WO 2010/031305

(56) References cited:
- EP-A1- 1 220 552
- CN-A- 1 418 347
- CN-A- 1 595 979
- CN-A- 101 075 892
- GB-A- 2 344 009
- JP-A- 2002 041 961
- JP-A- 2003 281 026
- "Mobile Advertising Requirements", INTERNET CITATION, 25 August 2008 (2008-08-25), pages 1-50, XP002605620, Retrieved from the Internet: URL:http://member.openmobilealliance.org/f tp/Public_documents/REQ/REQ-MOBAD/Permanen t_documents/OMA-RD-Mobile_Advertising-V1_0 -20080805-C.zip [retrieved on 2010-10-18]

## Description

### FIELD OF THE TECHNOLOGY

The present invention relates to the field of communication, and more particularly to an advertisement obtaining method, an advertisement obtaining system, an advertisement client, and an advertisement server.

### BACKGROUND OF THE INVENTION

With the development of Internet and 3G technologies, both the Internet advertisement service and the mobile advertisement service present a rapid growing trend. The mobile advertisement service is payment information spread through mobile media. Its purpose is to influence attitude, intention, and operation of an audience through the payment information, and the service is characterized in personalization, interactivity, mobility, low cost, vividness, and high-efficiency. In the mobile advertisement service, an application provided by an application provider or a content provided by a content provider can be combined to advertisements flexibly, so as to provide a personalized advertisement service for a user. In order to provide a fast and instant personalized advertisement service for the user, a terminal needs to obtain and store the advertisements in advance, so when the advertisements need to be displayed, the terminal can directly display the stored advertisements without having to obtain advertisements from a network side, thus saving the time of obtaining the advertisements.

The function that the terminal obtains and stores the advertisements in advance is implemented by an advertisement client in the terminal. According to a first solution in the prior art, the advertisement client obtains and stores the advertisements in advance, which includes the following steps. In step 11, when the advertisement obtaining time arrives as the number of effective advertisements stored in the advertisement client is lower than a certain standard or the launch task of the stored advertisements reaches a certain proportion, the advertisement client triggers an advertisement obtaining request. In step 12, the advertisement client transmits an advertisement obtaining request to an advertisement server. The advertisement obtaining request carries information, such as basic user information and terminal storage ability. In step 13, according to the information carried in the advertisement obtaining request, the advertisement server selects advertisements matched with the information. In step 14, the advertisement server returns the selected advertisements and corresponding advertisement metadata to the advertisement client. In step 15, the advertisement client stores the returned advertisements and the corresponding advertisement metadata.

According to a second solution in the prior art, the advertisement client obtains and stores the advertisements in advance, which includes the following steps. In step 21, an advertisement server transmits an advertisement notification message to the advertisement client. In step 22, the advertisement client judges whether a terminal is currently suitable to receive advertisements, for example, judges whether the terminal has a free storage space or judges the current network ability of the terminal. In step 23, if it is judged that the terminal is suitable to receive advertisements, steps 12 to 15 are performed, so as to accomplish the process of obtaining and storing the advertisements.

In the internet article "Mobile Advertising Requirements (Candidate Version_1.0, 05 Aug, 2008)" available on the internet from the URL http://member.open.mobilealliance.org/ftp/Public-documents/REQ/REQ-MOBAD/Permanent documents/OMA-RD-Mobile Advertising-V180-20080805-C.zip use cases relevant for Mobile Advertising are illustrated, and the requirements derived from these use cases are specified. This Requirement Document (RD) contains use cases and defines the requirements for the Mobile Advertisement Enabler. The following areas are covered in the RD: Personalisation of the Advertisements, Interactivity of Advertisements, and Advertising Metrics.

EP 1 220 552 A1 describes a method and a system for broadcast advertising to a mobile communication device. The mobile communication device receives a broadcast advertisement from an advertisement broadcasting system or source, preferably through a wireless communication channel, and selects that advertisement based on stored user profile or acceptance data, thereby providing broadcast advertising that is filtered by the communication device. If the communication device selects the advertisement, the advertisement may be displayed or stored.

GB 2 344 009 A describes that a TV, radio, DBS decoder or mobile phone enables advertising and programme broadcasts to be selectively displayed on the basis of receiver location or a user profile. The receiver determines its location by means of GPS, LORAN or by use of a cellular telephone. The receiver determines the user profile by interrogation. The receiver filters the received broadcast programmes and adverts for selective display according to the receiver location or user profile. The apparatus may be used in conjunction with a UMTS subscriber unit.

In the prior art, however, the following problems have become apparent. In order to provide a fast and personalized advertisement service for a user, an advertisement server needs to process advertisement obtaining requests transmitted by all advertisement clients, utilizes information carried in the advertisement obtaining requests to select advertisements matched with the information for each advertisement client, and needs to maintain various information of each user equipment, which raises high requirements for the processing ability of the advertisement server and the network resources.

### SUMMARY OF THE INVENTION

The present invention provides an advertisement obtaining method, according to claim 1, and an advertisement obtaining system, according to claim 9, which overcome the defect of high requirements for the processing ability of the advertisement server in the prior art, and lower the requirements for the processing ability of the advertisement server.

According to an aspect of the present invention an advertisement obtaining method includes in a first implementation form the following steps:
Transmitting, by an advertisement server, an advertisement guide to an advertisement client, wherein the advertisement guide comprises several items;
selecting, by the advertisement client, a specified item of the advertisement guide; and
obtaining and storing, by the advertisement client, advertisements corresponding to the specified item.

The transmitting, by the advertisement server, the advertisement guide to the advertisement client comprises:
transmitting, by the advertisement server, the advertisement guide and description information to a broadcast server;
transmitting, by the broadcast server, the advertisement guide to a broadcast client conforming to the description information according to the description information; and
transmitting, by the broadcast client, the received advertisement guide to the advertisement client.

The obtaining, by the advertisement client, the advertisements corresponding to the specified item comprises:
transmitting, by the advertisement client, an advertisement obtaining request carrying an advertisement identifier in the specified item, to the advertisement server; and
returning, by the advertisement server, advertisements corresponding to the advertisement identifier in the specified item to the advertisement client through the broadcast client and the broadcast server.

According to another aspect of the present invention an advertisement obtaining system includes an advertisement server, a broadcast server, a broadcast client and an advertisement client.

The advertisement server is configured to transmit an advertisement guide to an advertisement client, where the advertisement guide includes several items.

The advertisement client is configured to receive the advertisement guide, select a specified item of the advertisement guide, and obtain and store advertisements corresponding to the specified item.

The broadcast server is connected to the advertisement server and is configured to receive the advertisement guide and description information transmitted by the advertisement server, and transmit the advertisement guide to a broadcast client conforming to the description information according to the description information.

The broadcast client is connected to the broadcast server and the advertisement client respectively, and configured to transmit the received advertisement guide to the advertisement client.

The advertisement client is configured to obtain advertisements corresponding to the specified item by transmitting, by the advertisement client, an advertisement obtaining request carrying an advertisement identifier in the specified item, to the advertisement server; and by the advertisement server returning advertisements corresponding to the advertisement identifier in the specified item to the advertisement client through the broadcast client and the broadcast server.

In technical solutions according to the present invention, the advertisement client selects, by selecting the specified item, advertisements to be obtained, and obtains advertisements corresponding to the specified item. The selecting of the advertisements is accomplished by the advertisement client, while the advertisement server does not need to select the advertisements for the advertisement client, and this lowers the requirements for the processing ability of the advertisement server; the advertisement server transmits the advertisement guide initiatively, and this popularizes a new advertisement in time.

### BRIEF DESCRIPTION OF THE DRAWINGS

FIG. 1 is a schematic structural view of an advertisement client according to a first embodiment of the present invention;
FIG. 2 is a schematic structural view of an advertisement client according to a second embodiment of the present invention;
FIG. 3 is a schematic structural view of an advertisement server according to a first embodiment of the present invention;
FIG. 4 is a schematic structural view of an advertisement server according to a second embodiment of the present invention;
FIG. 5 is a schematic structural view of an advertisement obtaining system according to a first embodiment of the present invention;
FIG. 6 is a schematic structural view of an advertisement obtaining system according to a second embodiment of the present invention;
FIG. 7 is a schematic structural view of an advertisement obtaining system according to a third embodiment of the present invention;
FIG. 8 is a schematic structural view of an advertisement obtaining system according to a fourth embodiment of the present invention;
FIG. 9 is a flow chart of an advertisement obtaining method according to a first embodiment of the present invention;
FIG. 10 is a flow chart of an advertisement obtaining method according to a second embodiment of the present invention;
FIG. 11 is a flow chart of an advertisement obtaining method according to a third embodiment of the present invention;
FIG. 12 is a flow chart of an advertisement obtaining method according to a fourth embodiment of the present invention;
FIG. 13 is a flow chart of an advertisement obtaining method according to a fifth embodiment of the present invention;
FIG. 14 is a flow chart of an advertisement obtaining method according to a sixth embodiment of the present invention;
FIG. 15 is a flow chart of an advertisement obtaining method according to a seventh embodiment of the present invention; and
FIG. 16 is a flow chart that an advertisement client selects a specified item of an advertisement guide according to an embodiment of the present invention.

### DETAILED DESCRIPTION OF THE EMBODIMENTS

The technical solutions of embodiments of the present invention are further described in detail with reference to the accompanying drawings and the embodiments.

In embodiments of the present invention, an advertisement identifier, advertisement metadata, an advertisement category identifier, advertisement category metadata, and an advertisement guide are important information for identifying and describing an advertisement. As shown in Tables 1, 2, and 3, the advertisement identifier is a code to distinguish advertisements and is a unique identifier of an advertisement. For example, A0001, A0002, and A0003 in Table 1 are all advertisement identifiers. The advertisement metadata is description information of the advertisement. For example, an advertisement name, capacity, an advertisement category, a location, and a Uniform Resource Locator (URL) of the advertisement in Table 1 are all advertisement metadata. The advertisement metadata corresponds to the advertisement identifier, and one advertisement identifier corresponds to a group of advertisement metadata. For example, for the advertisement identifier A0001 in Table 1, its corresponding advertisement metadata is as follows: the advertisement name: aaa; capacity: 2.6 kb; the advertisement category: B0001/automobile; location: Shenzhen; and the advertisement address (URL of the advertisement): Http:aaa.com/A0001. The advertisement identifier and its corresponding advertisement metadata identifier describe one advertisement. The advertisement metadata may further include other description information, such as a type, a size, and a target group, which are not enumerated one by one here. The advertisement category identifier is a code to distinguish an advertisement category and is a unique identifier of an advertisement category. For example, B0001 and B0002 in Table 2, as well as C0001 and C0002 in Table 3 are all advertisement category identifiers. The advertisement category metadata is description of the advertisement category. For example, both the advertisement category name and the category of the advertisement in Tables 2 and 3 are advertisement category metadata. The category is a parent category of the category that is identified by the advertisement category identifier. For example, a category of automobiles in Table 2 is a category in C0001/transportation tool type. The advertisement guide is a set of the advertisement identifier and its corresponding advertisement metadata, and/or a set of the advertisement category identifier and its corresponding advertisement category metadata. For example, contents in Tables 1, 2, and 3 are all advertisement guides. An advertisement guide may include several items, and one item may include one advertisement identifier and its corresponding advertisement metadata or an advertisement category identifier and its corresponding advertisement category metadata. For example, advertisement identifiers in Table 1 include three items: A0001, A0002, and A0003, and the three items correspond to three advertisements respectively. It can be further seen from Tables 2 and 3 that, B0002 and B0003 in Table 2 are child advertisement category identifiers of C0002 in Table 3. In the technical solutions according to embodiments of the present invention, an advertisement client selects advertisements by selecting a specified item of an advertisement guide. The specified item includes a specified advertisement identifier and advertisement metadata. For example, if the advertisement client selects an item with an advertisement identifier as A0001 in the advertisement guide, A0001 and its corresponding advertisement metadata are a specified advertisement identifier and advertisement metadata. That is, an item consisting of A0001 and its corresponding advertisement metad.ata is a specified item, and the specified item corresponds to advertisements to be obtained.

**Table 1**

| **Advertisement Identifier** | **Advertisement Name** | **Capacity** | **Advertisement Category** | **Location** | **URL of Advertisement** |
|---|---|---|---|---|---|
| A0001 | aaa | 2.6 kb | B0001/Automobile | Shenzhen | Http:aaa.com/A0001 |
| A0002 | bbb | 3.0 kb | B0002/Household Appliance | Shenzhen | Http:bbb.com/A0002 |
| A0003 | ccc | 2.7 kb | B0002/Household Appliance | Shenzhen | Http:ccc.com/A0003 |
| ...... | ...... | ...... | ...... | ...... | ...... |

**Table 2**

| **Advertisement Category Identifier** | **Advertisement Category Name** | **Category** |
|---|---|---|
| B0001 | Automobile | C0001/Transportation Tool |
| B0002 | Household Appliance | C0002/Electronic Product |
| B0003 | Camera | C0002/Electronic Product |
| ...... | ...... | ...... |

**Table 3**

| **Advertisement Category Identifier** | **Advertisement Category Name** | **Category** |
|---|---|---|
| C0001 | Transportation Tool | D0001/Transportation |
| C0002 | Electronic Product | D0002/Communication |
| ...... | ...... | ...... |

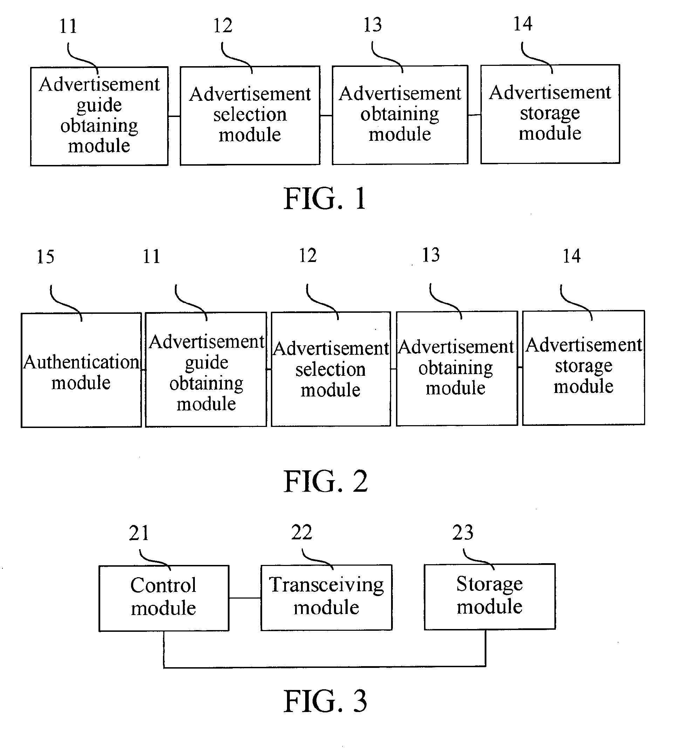

FIG. 1 is a schematic structural view of an advertisement client according to a first embodiment of the present invention. As shown in FIG. 1, the advertisement client includes an advertisement guide obtaining module 11, an advertisement selection module 12, an advertisement obtaining module 13, and an advertisement storage module 14. The advertisement selection module 12 is connected to the advertisement guide obtaining module 11 and the advertisement obtaining module 13 respectively, and the advertisement storage module 14 is connected to the advertisement obtaining module 13. The advertisement guide obtaining module 11 receives an advertisement guide transmitted by a network side, where the advertisement guide includes several items. The advertisement selection module 12 obtains the advertisement guide from the advertisement guide obtaining module 11, and selects a specified item of the advertisement guide, and the specified item includes a specified advertisement identifier and advertisement metadata. The advertisement obtaining module 13 obtains, from the network side, advertisements corresponding to the specified item. The advertisement storage module 14 stores the advertisements obtained by the advertisement obtaining module 13.

Specifically, in this embodiment, the advertisement selection module 12 can select a specified item of the advertisement guide according to user personalized information. The user personalized information includes basic user information, user preference information, and user context information. Specifically, the basic user information includes population statistics information such as user age and gender. The user preference information includes a user's preference information in respect of advertisements, such as a user's preference information in respect of the advertisement type or a user's preference information in respect of the advertisement category. The user context information includes current state information of the user, such as current location information of the user, and current terminal network ability or terminal storage ability of the user. The user personalized information may be stored in the advertisement client in advance, for example, directly stored in the advertisement selection module 12. The user personalized information may also be stored in other modules of the advertisement client in advance, and the advertisement selection module 12 obtains, from the other modules of the advertisement client, the user personalized information. For example, the user personalized information may be stored in the advertisement storage module 14, and the advertisement selection module 12 may obtain, from the advertisement storage module 14, the user personalized information. Alternatively, the user personalized information may also be stored at other locations in the terminal in advance, and the advertisement selection module 12 obtains, from said other locations in the terminal, the user personalized information. Said other locations in the terminal may be modules not in the advertisement client in the terminal.

Next, referring to FIG. 2, FIG. 2 is a schematic structural view of an advertisement client according to a second embodiment of the present invention. On the basis of the first embodiment in FIG. 1, further, if the advertisement guide transmitted by the network side is encrypted, the advertisement client may further include an authentication module 15 connected to an advertisement guide obtaining module 11. The authentication module 15 authenticates the advertisement guide received by the advertisement guide obtaining module 11, so as to determine validity and effectiveness of the network side that transmits the advertisement guide.

In the first and second embodiments, the advertisement client selects, by selecting the specified item in the advertisement guide, advertisements to be obtained. The selecting of the advertisements is accomplished by the advertisement client, while the advertisement server of the network side does not need to select advertisements for the advertisement client, and this lowers the requirements for the processing ability of the advertisement server.

FIG. 3 is a schematic structural view of an advertisement server according to a first embodiment of the present invention. As shown in FIG. 3, the advertisement server includes a control module 21, a transceiving module 22, and a storage module 23. The control module 21 is connected to the transceiving module 22 and the storage module 23 respectively. The storage module 23 stores an advertisement guide and advertisements. The control module 21 obtains the advertisement guide from the storage module 23, and transmits the obtained advertisement guide to the transceiving module 22. The transceiving module 22 transmits the advertisement guide obtained by the control module 21 to a terminal side, where,the advertisement guide includes several items. The control module 21 obtains, from the storage module 23, advertisements corresponding to a specified item of the advertisement guide. Specifically, the control module 21 obtains, from the storage module 23 and according to an advertisement identifier in the specified item received by the transceiving module 22, the advertisements corresponding to the specified item. The advertisement identifier in the specified item may be carried in an advertisement obtaining request transmitted from the terminal side to the transceiving module 22. The transceiving module 22 transmits the advertisements which are corresponding to the specified item and are obtained by the control module 21 to the terminal side.

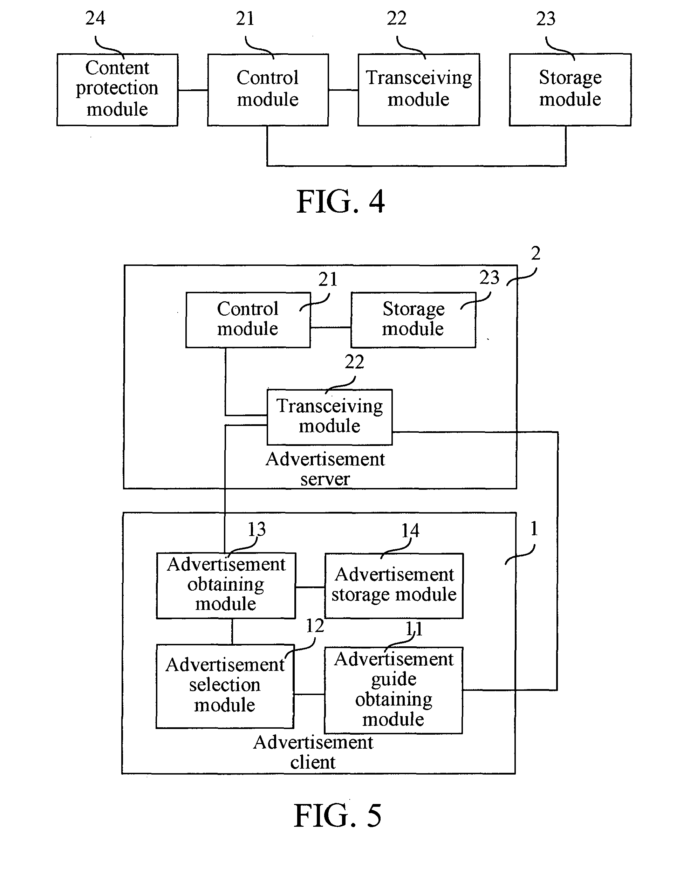

Next, referring to FIG. 4, FIG. 4 is a schematic structural view of an advertisement server according to a second embodiment of the present invention. As shown in FIG. 4, on the basis of the first embodiment in FIG. 3, the advertisement server may further include a content protection module 24 connected to a control module 21, and the content protection module 24 encrypts an advertisement guide obtained by the control module 21.

In the first and second embodiments, the advertisement server only needs to transmit the advertisement guide and advertisements according to a specified item, and does not need to select the advertisements, and this lowers the requirements for the processing ability of the advertisement server. In addition, the advertisement server transmits the advertisement guide initiatively, and this popularizes a new advertisement in time.

FIG. 5 is a schematic structural view of an advertisement obtaining system according to a first embodiment of the present invention. As shown in FIG. 5, the system includes an advertisement client 1 and an advertisement server 2. The advertisement server 2 transmits an advertisement guide to the advertisement client 1, where the advertisement guide includes several items. The advertisement client 1 receives the advertisement guide, and selects a specified item of the advertisement guide. The advertisement client 1 obtains and stores advertisements corresponding to the specified item. Specifically, the advertisement client 1 transmits an advertisement obtaining request to an advertisement server 2, where the request carries an advertisement identifier in the specified item. The advertisement server 2 transmits the advertisements corresponding to the specified item to the advertisement client 1 according to the advertisement identifier in the specified item.

Specifically, the advertisement client 1 may adopt the embodiment as shown in FIG. 1, and the advertisement server 2 may adopt the embodiment as shown in FIG. 3. The transceiving module 22 is connected to the advertisement guide obtaining module 11 and the advertisement obtaining module 13 respectively. The advertisement guide obtaining module 11 receives the advertisement guide transmitted by the transceiving module 22, and the advertisement obtaining module 13 transmits the advertisement identifier in the specified item of the advertisement guide to the transceiving module 22. Specifically, the transmitted advertisement obtaining request carries the advertisement identifier, and the advertisements, which are corresponding to the specified item and are transmitted by the transceiving module 22, are obtained.

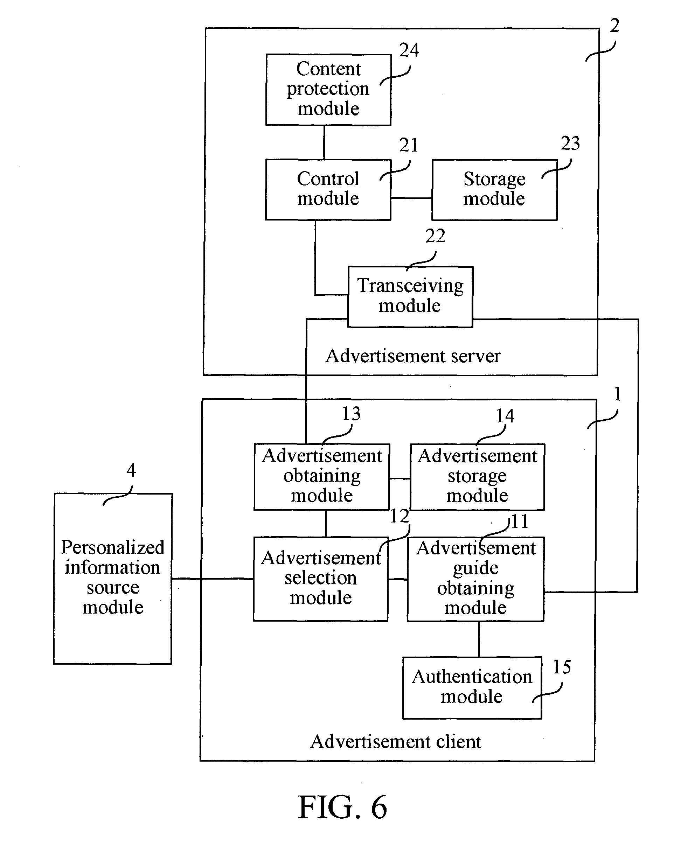

FIG. 6 is a schematic structural view of an advertisement obtaining system according to a second embodiment of the present invention. As shown in FIG. 6, on the basis of the first embodiment in FIG. 5, a content protection module 24 connected to a control module 21 is added into the advertisement server 2, and the content protection module 24 can encrypt an advertisement guide obtained by the control module 21. An authentication module 15 connected to an advertisement guide obtaining module 11 is added into an advertisement client 1. The authentication module 15 authenticates the encrypted advertisement guide received by the advertisement guide obtaining module 11, so as to determine validity and effectiveness of the advertisement server 2 which transmits the advertisement guide. The added content protection module 24 and authentication module 15 effectively increase security of the advertisement obtaining system.

Optionally, the system may further include a personalized information source module 4 connected to an advertisement selection module 12. The personalized information source module 4 stores user personalized information, and the advertisement selection module 12 can obtain, from the personalized information source module 4, the user personalized information.

In the first and second embodiments, the advertisement client selects, by selecting the specified item in the advertisement guide, advertisements to be obtained. The selecting of the advertisements is accomplished by the advertisement client, while the advertisement server does not need to select the advertisements for the advertisement client, and this lowers the requirements for the processing ability of the advertisement server. The advertisement server transmits the advertisement guide initiatively, and this popularizes a new advertisement in time. Further, since selecting of the advertisements is accomplished by the advertisement client, the load of the advertisement server is reduced. Hence, when receiving the advertisement obtaining request, the advertisement server can respond in time and rapidly, so as to increase the processing speed of the advertisement server.

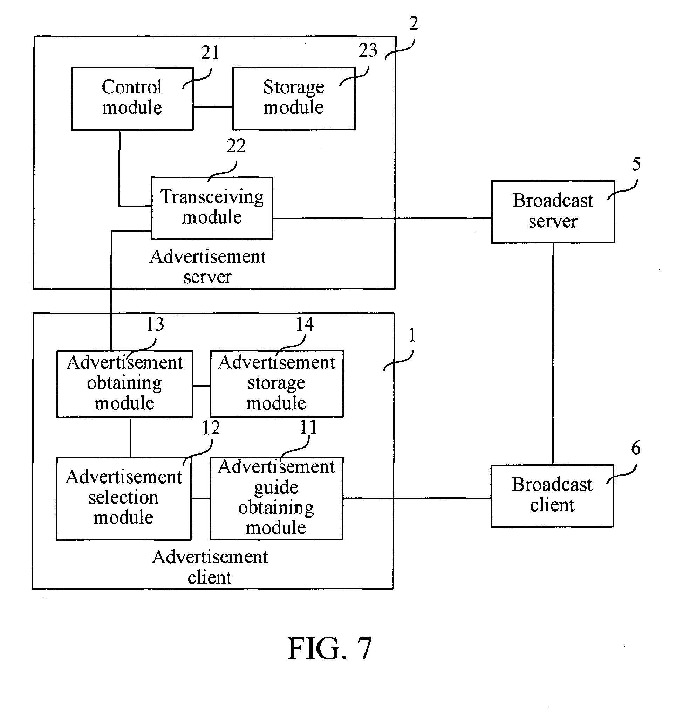

FIG. 7 is a schematic structural view of an advertisement obtaining system according to a third embodiment of the present invention. As shown in FIG. 7, on the basis of the first embodiment in FIG. 5, a broadcast server 5 and a broadcast client 6 connected to each other are added into the system in this embodiment. The broadcast server 5 is connected to an advertisement server 2, and the broadcast client 6 is connected to an advertisement client 1. The broadcast server 5 receives an advertisement guide and description information transmitted by the advertisement server 2, and transmits, according to the description information, the advertisement guide to the broadcast client 6 conforming to the description information. The broadcast client 6 transmits the received advertisement guide to the advertisement client 1. A difference between this embodiment and the first embodiment lies in that the advertisement guide obtaining module 11 of the advertisement client 1 is connected to the transceiving module 22 of the advertisement server 2 through the broadcast client 6 and the broadcast server 5.

The advertisement client 1 may further transmit the advertisement identifier in the specified item to the advertisement server 2 through the broadcast client 6 and the broadcast server 5, and the advertisement server 2 transmits the advertisements corresponding to the specified item to the advertisement client 1 through the broadcast server 5 and the broadcast client 6. Alternatively, the advertisement client 1 directly transmits the advertisement identifier in the specified item to the advertisement server 2, and the advertisement server 2 transmits the advertisements corresponding to the specified item to the advertisement client 1 through the broadcast server 5 and the broadcast client 6.

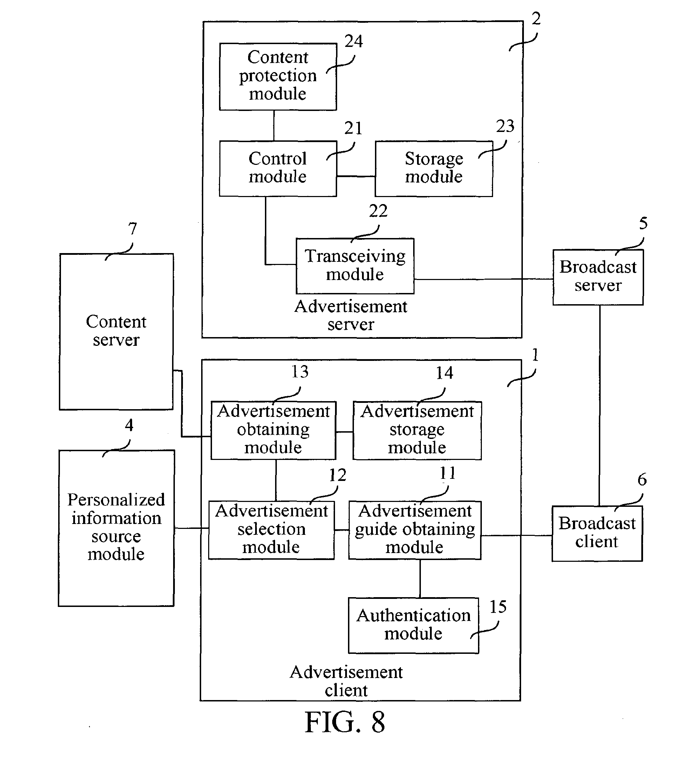

FIG. 8 is a schematic structural view of an advertisement obtaining system according to a fourth embodiment of the present invention. As shown in FIG. 8, on the basis of the third embodiment in FIG. 7, an authentication module 15 connected to an advertisement guide obtaining module 11 is added into an advertisement client 1 in the system of this embodiment, and a content protection module 24 connected to a control module 21 is added into an advertisement server 2.

Further, the system may further include a personalized information source module 4 connected to an advertisement selection module 12. The personalized information source module 4 stores user personalized information, and the advertisement selection module 12 can obtain, from the personalized information source module 4, the user personalized information.

Further, the system may further include a content server 7 connected to the advertisement client 1. Specifically, the content server 7 is connected to an advertisement obtaining module 13 in the advertisement client 1. When advertisements to be obtained by the advertisement client 1 are stored in the content server 7 instead of the advertisement server 2, the advertisement client 1 obtains, from the content server 7, advertisements corresponding to a specified item.

In the third and fourth embodiments, the advertisement server only needs to transmit the advertisement guide to a broadcast server, the broadcast server transmits the advertisement guide respectively to broadcast clients conforming to the description information in a broadcast manner, and then a broadcast client transmits the advertisement guide to a corresponding advertisement client. Compared with the first and second embodiments, in this embodiment, the advertisement server does not need to transmit an advertisement guide to each advertisement client, and meanwhile, each advertisement client only receives an advertisement guide that it needs, so that a new advertisement is remarkably and efficiently popularized, network resources are effectively saved, and processing efficiency of the advertisement obtaining system is increased.

In the embodiment, the broadcast server 5 is disposed at a network side, while the broadcast client 6 is disposed at a terminal side. For example, the broadcast client 6 may be disposed in a terminal, and corresponds to the advertisement client 1 disposed in the terminal.

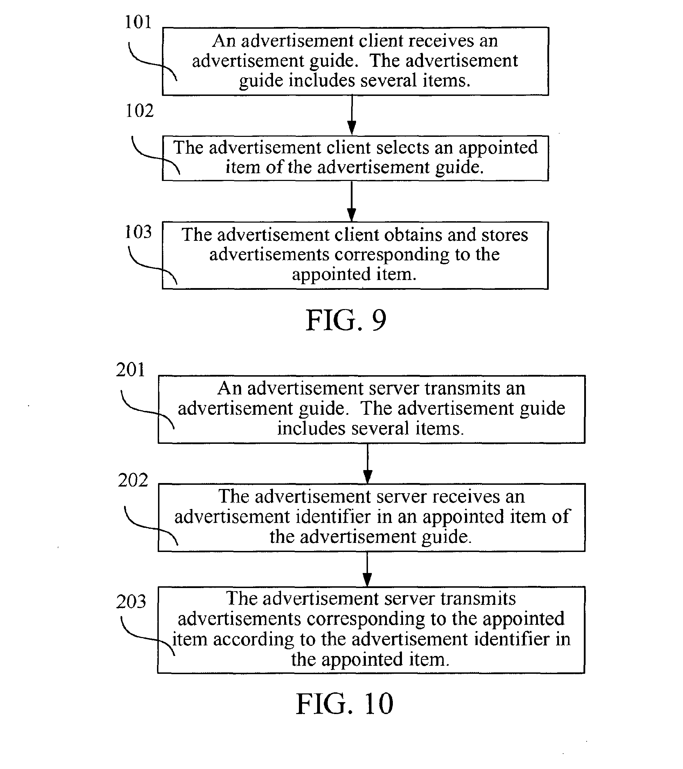

FIG. 9 is a flow chart of an advertisement obtaining method according to a first embodiment of the present invention. As shown in FIG. 9, the advertisement obtaining method includes the following steps.

In step 101, an advertisement client receives an advertisement guide, where the advertisement guide includes several items.

In step 102, the advertisement client selects a specified item of the advertisement guide.

Specifically, the specified item may include a specified advertisement identifier and advertisement metadata. The advertisement client can select the specified item of the advertisement guide according to user personalized information.

In step 103, the advertisement client obtains and stores advertisements corresponding to the specified item.

Specifically, the advertisement client can obtain, according to the advertisement identifier in the specified item or an advertisement address in the advertisement metadata in the specified item, the advertisements corresponding to the specified item.

In this embodiment, the advertisement client selects, by selecting the specified item in the advertisement guide, advertisements to be obtained. The selecting of the advertisements is accomplished by the advertisement client, while the advertisement server does not need to select the advertisements for the advertisement client, and this lowers the requirement for the processing ability of the advertisement server.

FIG. 10 is a flow chart of an advertisement obtaining method according to a second embodiment of the present invention. As shown in FIG. 10, the advertisement obtaining method includes the following steps.

In step 201, an advertisement server transmits an advertisement guide, where the advertisement guide includes several items.

In step 202, the advertisement server receives an advertisement identifier in a specified item of the advertisement guide.

Specifically, the specified item includes a specified advertisement identifier and advertisement metadata.

The specified item may be selected by an advertisement client according to user personalized information; and the advertisement identifier in the specified item may be carried in an advertisement obtaining request transmitted by the advertisement client.

In step 203, the advertisement server transmits advertisements corresponding to the specified item according to the advertisement identifier in the specified item.

The advertisement server in this embodiment only needs to transmit the advertisement guide and transmit advertisements according to an specified item, and does not need to select the advertisements, and this lowers the requirements for the processing ability of the advertisement server. Further, the advertisement server transmits the advertisement guide initiatively, and this popularizes a new advertisement in time.

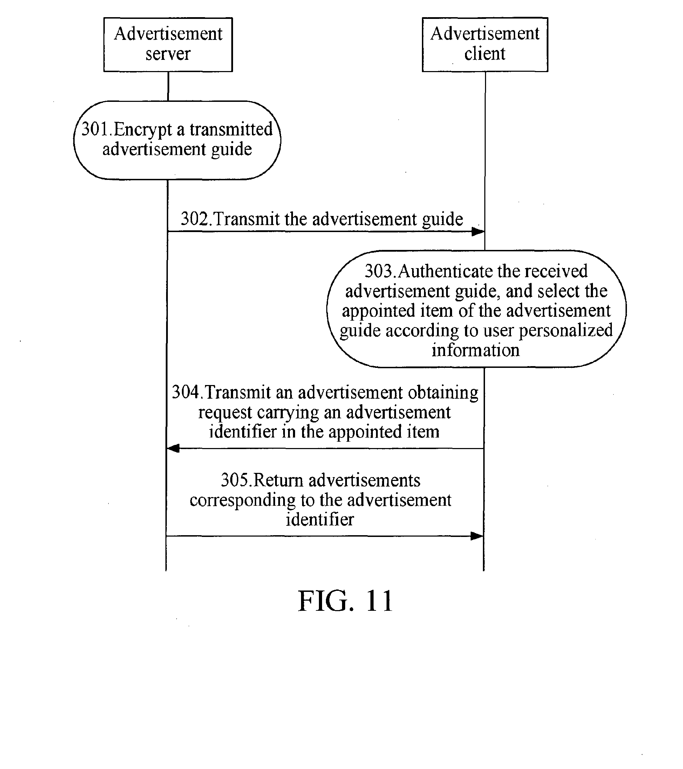

FIG. 11 is a flow chart of an advertisement obtaining method according to a third embodiment of the present invention. As shown in FIG. 11, the advertisement obtaining method includes the following steps.

In step 301, for data security, an advertisement server encrypts a transmitted advertisement guide.

In step 302, the advertisement server transmits the encrypted advertisement guide to an advertisement client.

In step 303, the advertisement client receives the advertisement guide, and authenticates the received advertisement guide. After the authenticating succeeds, the advertisement client selects a specified item of the advertisement guide.

Specifically, the advertisement client selects the specified item of the advertisement guide according to user personalized information. The advertisement client matches the user personalized information with advertisement metadata in the advertisement guide, and selects, from the advertisement guide, a specified item matched with the user personalized information.

In step 304, the advertisement client transmits an advertisement obtaining request carrying an advertisement identifier in the specified item to the advertisement server.

In step 305, the advertisement server returns advertisements corresponding to the advertisement identifier in the specified item, that is, advertisements corresponding to the specified item, to the advertisement client.

In this embodiment, the step of encrypting and authenticating the advertisement guide is optional.

In this embodiment, the advertisement client selects, by selecting the specified item in the advertisement guide, advertisements to be obtained. The selecting of the advertisements is accomplished by the advertisement client, while the advertisement server does not need to select the advertisements for the advertisement client, and this lowers the requirement for the processing ability of the advertisement server. The advertisement server transmits the advertisement guide initiatively, and this popularizes a new advertisement in time. Further, since the selecting of advertisements is accomplished by the advertisement client, the load of the advertisement server is reduced. Hence, when receiving the advertisement obtaining request, the advertisement server can respond in time and rapidly, so as to increase the processing speed of the advertisement server.

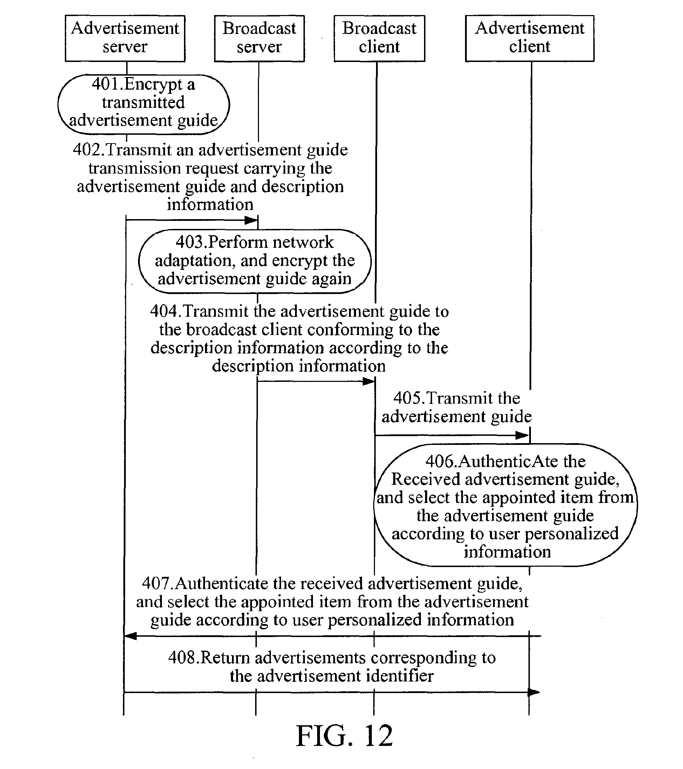

FIG. 12 is a flow chart of an advertisement obtaining method according to a fourth embodiment of the present invention. As shown in FIG. 12, the method includes the following steps.

In step 401, for data security, an advertisement server encrypts a transmitted advertisement guide.

In step 402, the advertisement server transmits an advertisement guide transmission request carrying the advertisement guide and description information to a broadcast server, so that the advertisement server transmits the advertisement guide and the description information to the broadcast server. The advertisement guide transmission request is used for requesting the broadcast server to transmit the advertisement guide to a broadcast client conforming to the description information in a broadcast manner. The description information can be location information, for example, Shenzhen.

In step 403, the broadcast server performs network adaptation, and encrypts the encrypted advertisement guide again.

In step 404, the broadcast server transmits the advertisement guide to the broadcast client conforming to the description information in a broadcast manner according to the description information.

In step 405, the broadcast client transmits the received advertisement guide to a corresponding advertisement client.

In step 406, the advertisement client receives the advertisement guide, and authenticates the received advertisement guide. After the authentication succeeds, the advertisement client matches the user personalized information with advertisement metadata in the advertisement guide, and selects, from the advertisement guide, a specified item matched with the user personalized information.

In step 407, the advertisement client transmits an advertisement obtaining request carrying an advertisement identifier in the specified item, to the advertisement server.

In step 408, the advertisement server returns advertisements corresponding to the advertisement identifier in the specified item, that is, advertisements corresponding to the specified item, to the advertisement client.

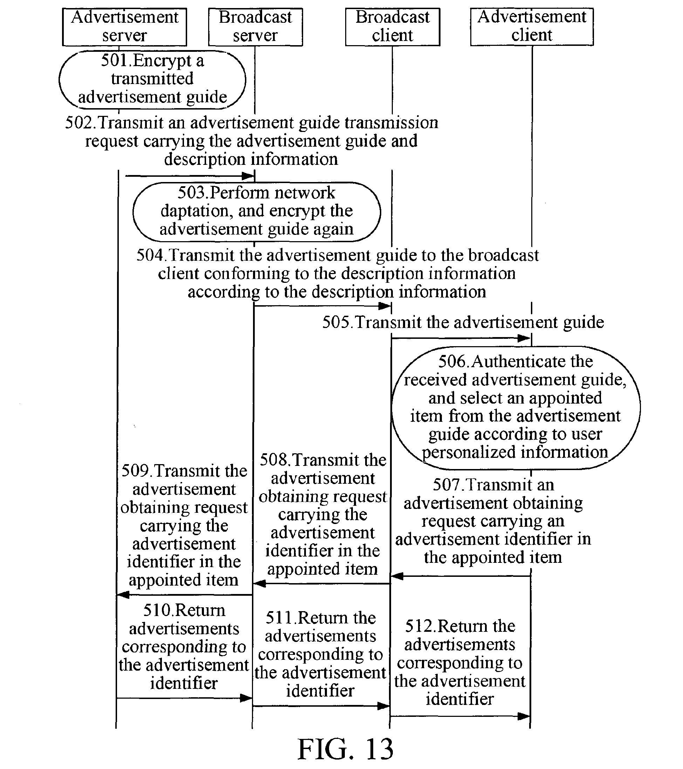

FIG. 13 is a flow chart of an advertisement obtaining method according to a fifth embodiment of the present invention. As shown in FIG. 13, a difference between the method and that in the fourth embodiment in FIG. 12 is as follows.

In step 507, an advertisement client transmits an advertisement obtaining request carrying an advertisement identifier in a specified item, to a broadcast client.

In step 508, the broadcast client transmits the advertisement obtaining request carrying the advertisement identifier in the specified item, to a broadcast server.

In step 509, the broadcast server transmits the advertisement obtaining request carrying the advertisement identifier in the specified item, to an advertisement server.

In step 510, the advertisement server returns advertisements corresponding to the advertisement identifier in the specified item, to the broadcast server.

In step 511, the broadcast server returns the advertisements corresponding to the advertisement identifier in the specified item, to the broadcast client.

In step 512, the broadcast client returns the advertisements corresponding to the advertisement identifier in the specified item, that is, advertisements corresponding to the specified item, to the advertisement client.

Steps 501 to 506 in this embodiment are the same as steps 401 to 406 in the fourth embodiment in FIG. 12, and are not described in detail any more here.

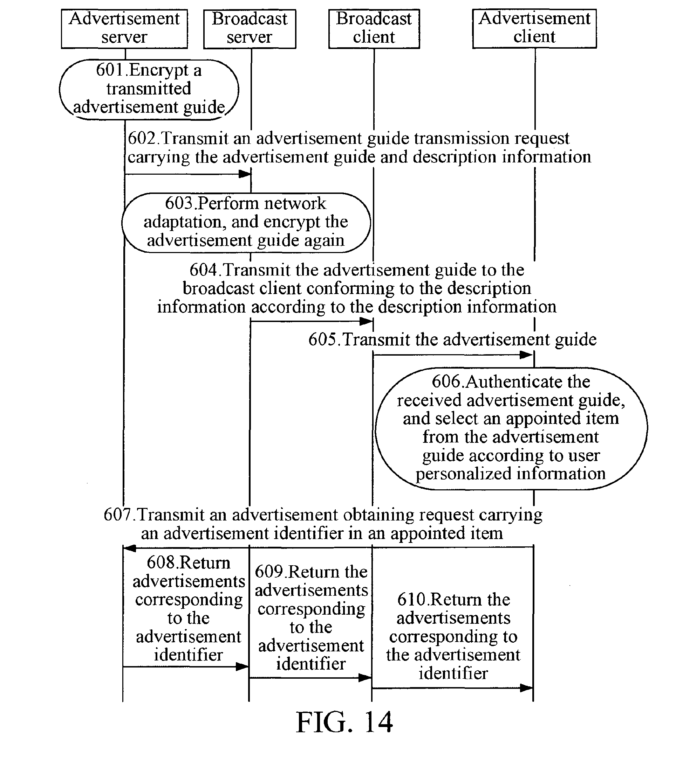

FIG. 14 is a flow chart of an advertisement obtaining method according to a sixth embodiment of the present invention. As shown in FIG. 14, a difference between the method and that in the fifth embodiment in FIG. 13 is as follows.

In step 607, an advertisement client directly transmits an advertisement obtaining request carrying an advertisement identifier in a specified item, to an advertisement server.

Steps 601 to 606 are the same as steps 501 to 506 in the fifth embodiment in FIG. 13, steps 608 to 610 are the same as steps 510 to 512 in the fifth embodiment in FIG. 13, and are not described in detail any more here.

Compared with the third embodiment in FIG. 11, in the fourth, fifth, and sixth embodiments, the broadcast server respectively transmits the advertisement guide to broadcast clients conforming to description information in a broadcast manner, and then a broadcast client transmits the advertisement guide to a corresponding advertisement client, so each advertisement client only receives an advertisement guide that it needs, so that a new advertisement is remarkably and efficiently popularized, network resources are effectively saved, and processing efficiency of the advertisement obtaining system is increased.

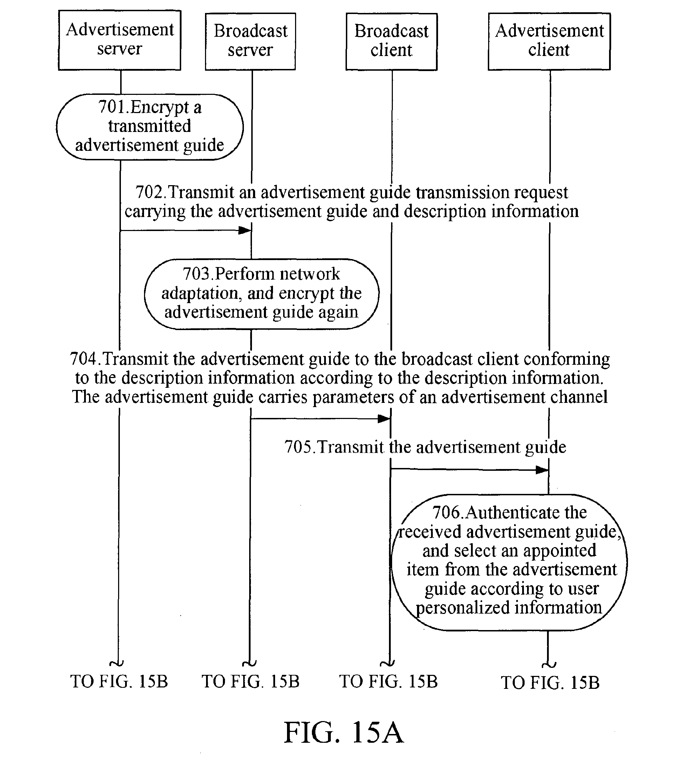

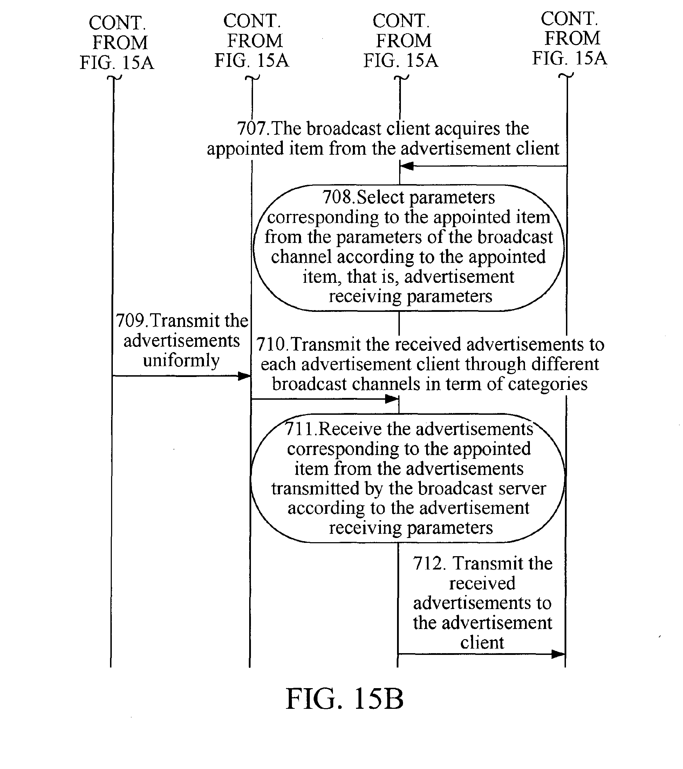

FIG. 15 is a flow chart of an advertisement obtaining method according to a seventh embodiment of the present invention. As shown in FIG. 15, the method includes the following steps.

In step 701, for data security, an advertisement server encrypts a transmitted advertisement guide.

In step 702, the advertisement server transmits an advertisement guide transmission request carrying the advertisement guide and description information to a broadcast server, so that the advertisement server transmits the advertisement guide and the description information to the broadcast server. The advertisement guide transmission request is used for requesting the broadcast server to transmit the advertisement guide to a broadcast client conforming to the description information in a broadcast manner. The description information may be location information, for example, Shenzhen.

In step 703, the broadcast server performs network adaptation, and encrypts the encrypted advertisement guide again.

In step 704, the broadcast server transmits the advertisement guide and parameters of an advertisement channel to the broadcast client conforming to the description information in a broadcast manner according to the description information.

The parameters of the broadcast channel may be carried by the advertisement guide. The parameters of the broadcast channel may be a set of a multicast address, a port number, and/or a receiving time of a received broadcast. One advertisement identifier or advertisement category identifier in the advertisement guide may correspond to a multicast address, a port number, and/or a receiving time of a received broadcast.

In step 705, the broadcast client transmits the received advertisement guide to a corresponding advertisement client.

In step 706, the advertisement client receives the advertisement guide, and authenticates the received advertisement guide. After the authenticating succeeds, the advertisement client matches the user personalized information with advertisement metadata in the advertisement guide, and selects, from the advertisement guide, a specified item matched with the user personalized information.

In step 707, the broadcast client acquires, from the advertisement client, the specified item.

In step 708, the broadcast client selects parameters corresponding to the specified item from the parameters of the broadcast channel according to the specified item.

Because an advertisement identifier or advertisement category identifier can correspond to a multicast address, a port number, and/or a receiving time of one received broadcast, the specified item also corresponds to a multicast address, a port number, and/or a receiving time of one received broadcast. The broadcast client selects the parameters corresponding to the specified item from the parameters of the broadcast channel according to the obtained specified item. The parameters corresponding to the specified item are the multicast address, the port number, and/or the receiving time of the received broadcast. The selected multicast address, port number, and/or receiving time of the received broadcast are advertisement receiving parameters.

The advertisement receiving parameters are used for receiving advertisements conforming to the advertisement receiving parameters from the advertisements transmitted by the broadcast server. Because the advertisement receiving parameters correspond to the specified item, the advertisements received by the broadcast client are the advertisements corresponding to the specified item.

In step 709, the advertisement server uniformly transmits the advertisements to the broadcast server.

In step 710, the broadcast server transmits the received advertisements to the broadcast client through different broadcast channels according to categories.

The categories can be determined according to contents of the advertisement metadata in the advertisement guide, such as a capacity, an advertisement category, and a location, and may also be determined according to the advertisement category identifier and the advertisement identifier.

In step 711, the broadcast client receives the advertisements corresponding to the specified item from the advertisements transmitted by the broadcast server according to the advertisement receiving parameters.

The broadcast client receives the advertisements conforming to the advertisement receiving parameters from the advertisement transmitted by the broadcast server according to the advertisement receiving parameters.

In step 712, the broadcast client transmits the advertisements corresponding to the specified item to the corresponding advertisement client, and the advertisements are stored by the advertisement client.

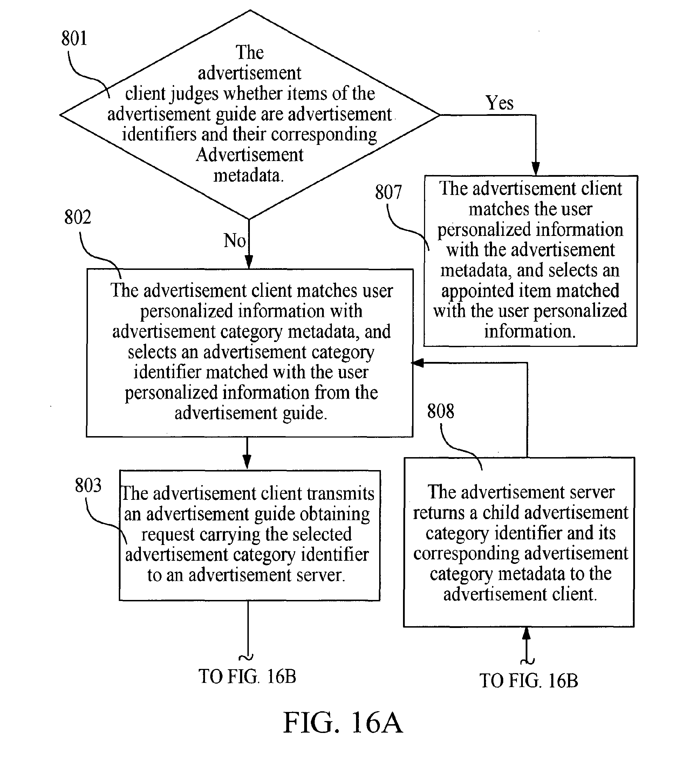

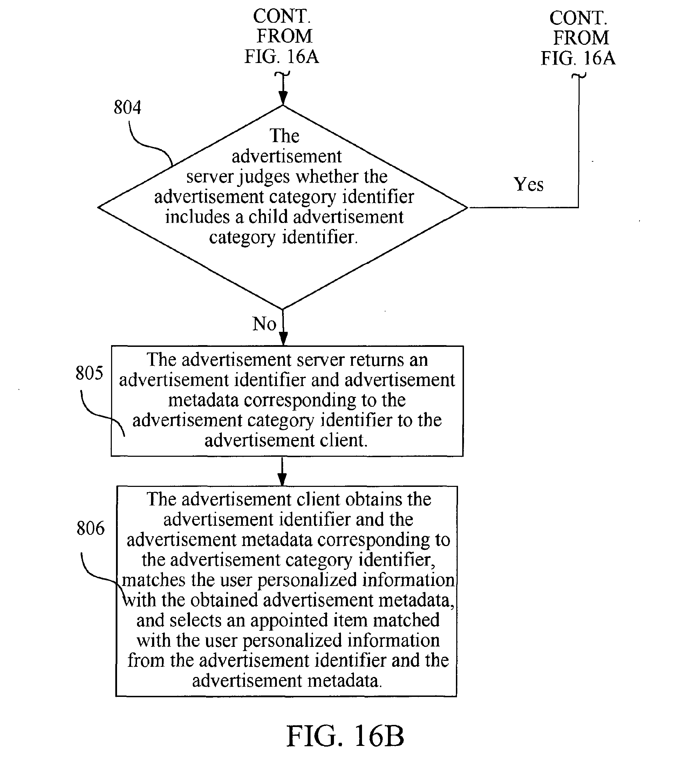

In the first to seventh embodiments, when the advertisement guide received by the advertisement client includes the advertisement identifier and/or the advertisement category identifier, a process that the advertisement client selects the specified item of the advertisement guide can be referred to FIG. 16. FIG. 16 is a flow chart that an advertisement client selects a specified item of an advertisement guide according to the present invention. The procedure includes the following steps.

In step 801, the advertisement client judges whether items of the advertisement guide are advertisement identifiers and their corresponding advertisement metadata. If not, step 802 is performed. If yes, step 807 is performed.

In step 802, the advertisement client matches user personalized information with advertisement category metadata, and selects an advertisement category identifier matched with the user personalized information from the advertisement guide.

In step 803, the advertisement client transmits an advertisement guide obtaining request carrying the selected advertisement category identifier, to an advertisement server.

In step 804, the advertisement server judges whether the advertisement category identifier includes a child advertisement category identifier. If yes, step 808 is performed. If not, step 805 is performed.

In step 805, the advertisement server returns an advertisement identifier and advertisement metadata corresponding to the advertisement category identifier, to the advertisement client.

In step 806, the advertisement client obtains the advertisement identifier and the advertisement metadata corresponding to the advertisement category identifier, matches the user personalized information with the obtained advertisement metadata, and selects a specified item matched with the user personalized information from the obtained advertisement identifier and advertisement metadata. The procedure ends.

In step 807, the advertisement client matches the user personalized information with the advertisement metadata, and selects a specified item matched with the user personalized information from the advertisement guide. The procedure ends.

In step 808, the advertisement server returns a child advertisement category identifier and its corresponding advertisement category metadata to the advertisement client, and then step 802 is performed.

In the first to seventh embodiments, if advertisements to be obtained are stored in a content server instead of the advertisement server, the advertisement client can directly transmit an advertisement obtaining request carrying an advertisement address in the advertisement metadata in the specified item, to the content server, and receive advertisements corresponding to the advertisement address returned by the content server. Alternatively, the advertisement client may further transmit the advertisement obtaining request carrying the advertisement address in the advertisement metadata in the specified item to the content server through a broadcast client and a broadcast server, and receive the advertisements corresponding to the advertisement address returned by the content server through the broadcast server and the broadcast client. In this case, the advertisement client directly obtains the advertisements from the advertisement address.

If the user personalized information is stored in a personalized information source module, both the first embodiment and the seventh embodiment may further include the step that the advertisement client obtains the user personalized information from the personalized information source module.

A technical solution of the advertisement obtaining method is described in detail through one example hereinafter.

Taking the advertisement guides in Tables 1, 2, and 3 as an example, the description information is location information, and the location information is set as Shenzhen.

In step 901, an advertisement server transmits an advertisement guide transmission request to a broadcast server. The advertisement guide transmission request carries the advertisement guides and the description information with the location information as Shenzhen in Tables 1 and 3. The advertisement guide transmission request is used for requesting the broadcast server to finally transmit the carried advertisement guides to an advertisement client located at Shenzhen.

In step 902, the broadcast server transmits the advertisement guides in Tables 1 and 3 to a broadcast client located at Shenzhen.

In step 903, the broadcast client transmits the advertisement guides in Tables 1 and 3 to an advertisement client corresponding to the broadcast client.

In step 904, if the advertisement client judges that the items in Table 1 are advertisement identifiers and their corresponding advertisement metadata, the advertisement client matches user personalized information that the user preference information is the automobile with the items in Table 1, and selects an item with an advertisement category as the automobile as an specified item from the items. That is, an item with the advertisement identifier as A0001 is a specified item. If the advertisement client further judges that the contents in Table 3 are advertisement category identifiers and their corresponding advertisement category metadata, step 905 is performed.

In step 905, the advertisement client matches user personalized information that the user preference information is the electronic product with items in Table 3, and selects an advertisement category identifier C0002 from the items.

In step 906, the advertisement client transmits an advertisement guide obtaining request carrying C0002, to the broadcast server.

In step 907, the advertisement server judges that C0002 includes child advertisement category identifiers, that is, B0002 and B0003 in Table 2, and returns B0002 and B0003 and their corresponding advertisement category metadata to the advertisement client.

In step 908, the advertisement client matches user personalized information that the user preference information is the household appliance with the items in Table 2, and selects the advertisement category identifier B0002 from B0002 and B0003.

In step 909, the advertisement client transmits an advertisement guide obtaining request carrying B0002, to the advertisement server.

In step 910, if the advertisement server judges that B0002 does not include any child advertisement category identifier, the advertisement server returns the advertisement identifier and advertisement metadata corresponding to B0002, that is, items with the advertisement identifiers A0002 and A0003 in Table 1, to the advertisement client.

In step 911, the advertisement client matches user personalized information of terminal storage ability with the items of A0002 and A0003, and selects an item with a capacity being 2.7 kb as a specified item from the items. That is, an item with an advertisement identifier A0003 is a specified item.

In step 912, the advertisement client transmits an advertisement obtaining request carrying advertisement URLs (Http:aaa.com/A0001 and Http:ccc.com/A0003) in items A0001 and A0003 to a content server, directly obtains the advertisements corresponding to A0001 and A0003 respectively from the URLs in the content server, and stores the obtained advertisements.

This example may further include the step of encrypting and authenticating the advertisement guide, which is not described in detail any more here.

In the embodiments of the advertisement obtaining method according to the present invention, the advertisement client selects, by selecting the specified item, advertisements to be obtained, and obtains the advertisements corresponding to the specified item. The selecting of the advertisements is accomplished by the advertisement client, while the advertisement server does not need to select the advertisements for the advertisement client, and this lowers the requirements for the processing ability of the advertisement server; and the advertisement server transmits the advertisement guide initiatively, and this popularizes a new advertisement in time. Further, since the selecting of the advertisements is accomplished by the advertisement client, the load of the advertisement server is reduced. Hence, when receiving the advertisement obtaining request, the advertisement server can respond in time and rapidly, so as to increase the processing speed of the advertisement server. Through the method that the advertisement guide is respectively transmitted to broadcast clients conforming to description information in a broadcast manner through a broadcast server and a broadcast client, and then transmitted to a corresponding advertisement client by the broadcast client, each advertisement client only receives an advertisement guide that it needs, so that a new advertisement is remarkably and efficiently popularized, network resources are effectively saved, and processing efficiency of the advertisement obtaining system is increased.

Persons of ordinary skill in the art may understand that all or part of the steps of the method according to the embodiments of the present invention may be implemented by a program instructing relevant hardware. The program may be stored in one or more computer readable storage media. When the program is run, the steps of the method according to the embodiments of the present invention are performed. The storage medium may be a magnetic disk, an optical disk, a read-only memory (ROM), or a random access memory (RAM).

It should be noted that the above embodiments are merely provided for illustrating the technical solutions of the present invention, but not intended to limit the present invention.

## Claims

1. An advertisement obtaining method comprising:
transmitting, by an advertisement server (2), an advertisement guide to an advertisement client (1), wherein the advertisement guide comprises several items;
selecting (606), by the advertisement client (1), a specified item of the advertisement guide; and
obtaining and storing (103), by the advertisement client, advertisements corresponding to the specified item,
**characterized in that** the transmitting, by the advertisement server (2), the advertisement guide to the advertisement client (1) comprises:
transmitting (601), by the advertisement server (2), the advertisement guide and description information to a broadcast server (5);
transmitting (602), by the broadcast server (5), the advertisement guide to a broadcast client (6) conforming to the description information according to the description information; and
transmitting (603), by the broadcast client (6), the received advertisement guide to the advertisement client (1),
and **in that** the obtaining, by the advertisement client (1), the advertisements corresponding to the specified item comprises:
transmitting, by the advertisement client (1), an advertisement obtaining request carrying an advertisement identifier in the specified item, to the advertisement server (2); and
returning, by the advertisement server (2), advertisements corresponding to the advertisement identifier in the specified item to the advertisement client (1) through the broadcast client (6) and the broadcast server (5).

2. The method according to claim 1, wherein the specified item comprises a specified advertisement identifier and advertisement metadata.

3. The method according to claim 1, wherein the advertisement guide is a set of an advertisement identifier and its corresponding advertisement metadata.

4. The method according to claim 1, wherein the advertisement guide is a set of an advertisement category identifier and its corresponding advertisement category metadata.

5. The method according to claim 1, wherein the advertisement guide is a set of an advertisement identifier and its corresponding advertisement metadata as well as an advertisement category identifier and its corresponding advertisement category metadata.

6. The method according to claim 3, wherein the selecting, by the advertisement client (1), the specified item of the advertisement guide comprises:
matching (406), by the advertisement client (1), user personalized information with the advertisement metadata in the advertisement guide, and selecting a specified item matched with the user personalized information from the advertisement guide.

7. The method according to claim 4 or 5, wherein the selecting, by the advertisement client (1), the specified item of the advertisement guide comprises:
matching (802), by the advertisement client, user personalized information with the advertisement category metadata in the advertisement guide, selecting an advertisement category identifier matched with the user personalized information from the advertisement guide, and transmitting an advertisement guide obtaining request carrying the advertisement category identifier, to the advertisement server;
returning (805), by the advertisement server, an advertisement identifier and advertisement metadata corresponding to the advertisement category identifier, to the advertisement client; and
matching (806), by the advertisement client, the user personalized information with the advertisement metadata returned by the advertisement server, and selecting a specified item matched with the user personalized information from the advertisement identifier and the advertisement metadata returned by the advertisement server.

8. The method according to claim 1, wherein while transmitting the advertisement guide to the broadcast client (6) conforming to the description information according to the description information, the broadcast server further transmits (704) parameters of a broadcast channel to the broadcast client conforming to the description information.

9. An advertisement obtaining system comprising:
an advertisement server (2), configured to transmit an advertisement guide to an advertisement client (1), wherein the advertisement guide comprises several items; and
an advertisement client (1), configured to receive the advertisement guide, select a specified item of the advertisement guide, and obtain and store advertisements corresponding to the specified item, and
**characterized by**
a broadcast server (5), connected to the advertisement server (2), and configured to receive the advertisement guide and description information transmitted by the advertisement server (2), and transmit the advertisement guide to a broadcast client (1) conforming to the description information according to the description information;
and
the broadcast client (6), connected to the broadcast server (5) and the advertisement client (1) respectively, and configured to transmit the received advertisement guide to the advertisement client (1),
and in that said advertisement client (1) is configured to obtain advertisements corresponding to the specified item by transmitting an advertisement obtaining request carrying an advertisement identifier in the specified item, to the advertisement server;
and by the advertisement server (2) returning advertisements corresponding to the advertisement identifier in the specified item to the advertisement client (1) through the broadcast client (6) and the broadcast server (5).

## Patentansprüche

1. Werbungsgewinnungsverfahren, umfassend:
Senden, durch einen Werbe-Server (2), eines Werbe-Leitfadens an einen Werbe-Client (1), wobei der Werbe-Leitfaden mehrere Positionen umfasst,
Auswählen (606), durch den Werbe-Client (1), einer spezifizierten Position aus dem Werbe-Leitfaden; und
Gewinnen und Speichern (103), durch den Werbe-Client, von Werbe-Botschaften gemäß der spezifizierten Position;
**dadurch gekennzeichnet, dass** das Senden, durch den Werbe-Server (2), des Werbe-Leitfadens an den Werbe-Client (1) umfasst:
Senden (601), durch den Werbe-Server (2), des Werbe-Leitfadens und der Beschreibungsinformation an einen Sende-Server (5),
Senden (602), durch den Sende-Server (5), des Werbe-Leitfadens an einen Sende-Client (6), der der Beschreibungsinformation gemäß der Beschreibungsinformation entspricht; und
Senden (603), durch den Sende-Client (6), des erhaltenen Werbe-Leitfadens an den Werbe-Client (1);
und dadurch, dass das Gewinnen, durch den Werbe-Client (1), der Werbe-Botschaften, die der spezifizierten Position entsprechen, umfasst:
Senden, durch den Werbe-Client (1), einer Werbe-Gewinnungsanforderung, die eine Werbekennung in der spezifizierten Position trägt, an den Werbe-Server (2); und
Zurücksenden, durch den Werbe-Server (2), von Werbe-Botschaften, die der Werbe-Kennung in der spezifizierten Position entsprechen, an den Werbe-Client (1) über den Sende-Client (6) und den Sende-Server (2).

2. Verfahren gemäß Anspruch 1, wobei die spezifizierte Position eine spezifizierte Werbe-Kennung und Werbe-Metadaten umfasst.

3. Verfahren gemäß Anspruch 1, wobei der Werbe-Leitfaden ein Satz aus einer Werbe-Kennung und ihren entsprechenden Werbe-Metadaten ist.

4. Verfahren gemäß Anspruch 1, wobei der Werbe-Leitfaden einen Satz einer Werbe-Kategoriekennung und ihren entsprechenden Werbe-Kategoriemetadaten darstellt.

5. Verfahren gemäß Anspruch 1, wobei der Werbe-Leitfaden einen Satz aus einer Werbe-Kennung und ihren entsprechenden Werbe-Metadaten sowie einer Werbe-Kategoiiekennung und ihren entsprechenden Werbe-Kategoiiemetadaten darstellt.

6. Verfahren gemäß Anspruch 3, wobei das Auswählen, durch den Werbe-Client (1), der spezifizierten Position aus dem Werbe-Leitfaden umfasst:
Abstimmen (406), durch den Werbe-Client (1), von personalisierten Benutzerinformationen mit den Werbe-Metadaten in dem Werbe-Leitfaden, und Auswählen einer spezifizierten Position, die mit den personalisierten Benutzerinformationen aus dem Werbe-Leitfaden abgestimmt ist.

7. Verfahren gemäß Anspruch 4 oder 5, wobei das Auswählen, durch den Werbe-Client (1), der spezifizierten Position aus dem Werbe-Leitfaden umfasst:
Abstimmen (802), durch den Werbe-Client, von personalisierten Benutzerinformationen mit den Werbe-Kategoriemetadaten in dem Werbe-Leitfaden, Auswählen einer Werbe-Kategoriekennung, die mit den personalisierten Benutzerinformationen aus dem Werbe-Leitfaden abgestimmt ist, und Senden einer Werbe-Leitfadengewinnungsanforderung, die die Werbe-Kategoriekennung trägt, an den Werbe-Server;
Zurücksenden (805), durch den Werbe-Server, einer Werbe-Kennung und von Werbe-Metadaten, die der Werbe-Kategoriekennung entsprechen, an den Werbe-Client; und
Abstimmen (806), durch den Werbe-Client, der personalisierten Benutzerinformationen mit den Werbe-Metadaten, die durch den Werbe-Server zurückgesandt wurden, und Auswählen einer spezifizierten Position, die mit den personalisierten Benutzerinformationen aus der Werbe-Kennung und den Werbe-Metadaten abgestimmt ist, die durch den Werbe-Server zurückgesandt wurden.

8. Verfahren gemäß Anspruch 1, wobei, während des Sendens des Werbe-Leitfadens an den Sende-Client (6), der der Beschreibungsinformation gemäß der Beschreibungsinformation entspricht, der Sende-Server ferner Parameter eines Sende-Kanals an den Sende-Client, der der Beschreibungsinformation entspricht, sendet (704).

9. Werbungsgewinnungssystem, umfassend:
einen Werbe-Server (2), der ausgelegt ist, um einen Werbe-Leitfaden an einen Werbe-Client (1) zu senden, wobei der Werbe-Leitfaden mehrere Positionen umfasst;
und einen Werbe-Client (1), der ausgelegt ist, um den Werbe-Leitfaden zu empfangen, eine spezifizierte Position aus dem Werbe-Leitfaden auszuwählen und Werbe-Botschaften, die der spezifizierten Position entsprechen, zu gewinnen und zu speichern, und
**gekennzeichnet durch**
einen Sende-Server (5), der mit dem Werbe-Server (2) verbunden und ausgelegt ist, den Werbe-Leitfaden und die Beschreibungsinformation, die von dem Werbe-Server (2) gesendet werden, zu empfangen, und den Werbe-Leitfaden an einen Sende-Client (1), der der Beschreibungsinformation gemäß der Beschreibungsinformation entspricht, zu senden, und
den Sende-Client (6), der mit dem Sende-Server (5) beziehungsweise dem Werbe-Client (1) verbunden ist, und ausgelegt ist, um den erhaltenen Werbe-Leitfaden an den Werbe-Client (1) zu senden,
und dass der Werbe-Client (1) ausgelegt ist, Werbe-Botschaften, die der spezifizierten Position entsprechen, zu gewinnen, indem eine Werbegewinnungsanforderung, die eine Werbe-Kennung in der spezifizierten Position trägt, an den Werbe-Server gesendet wird;
und **durch** den Werbe-Server (2) Werbe-Botschaften, die der Werbe-Kennung in der spezifizierten Position entsprechen, über den Sende-Client (6) und den Sende-Server (5) an den Werbe-Client (1) zuiückzusenden.

## Revendications

1. Procédé d'obtention de publicités, comprenant :
la transmission, par un serveur de publicités (2), d'un guide de publicités à un client de publicités (1), le guide de publicités comprenant plusieurs postes ;
la sélection (606), par le client de publicités (1), d'un poste spécifié du guide de publicités ; et
l'obtention et la mémorisation (103), par le client de publicités, de publicités correspondant au poste spécifié,
**caractérisé en ce que** la transmission, par le serveur de publicités (2), du guide de publicités au client de publicités (1) comprend :
la transmission (601), par le serveur de publicités (2), du guide de publicités et d'informations de description à un serveur de diffusion (5) ;
la transmission (602), par le serveur de diffusion (5), du guide de publicités à un client de diffusion (6) conforme aux informations de description en fonction des informations de description ; et
la transmission (603), par le client de diffusion (6), du guide de publicités reçu au client de publicités (1),
et **en ce que** l'obtention, par le client de publicités (1), des publicités correspondant au poste spécifié comprend :
la transmission, par le client de publicités (1), d'une requête d'obtention de publicités comportant un identifiant de publicité dans le poste spécifié, au serveur de publicités (2) ; et
le renvoi, par le serveur de publicités (2), de publicités correspondant à l'identifiant de publicité dans le poste spécifié au client de publicités (1) par le biais du client de diffusion (6) et du serveur de diffusion (5).

2. Procédé selon la revendication 1, dans lequel le poste spécifié comprend un identifiant de publicité spécifié et des métadonnées de publicité.

3. Procédé selon la revendication 1, dans lequel le guide de publicités est un ensemble d'un identifiant de publicité et de ses métadonnées de publicité correspondantes.

4. Procédé selon la revendication 1, dans lequel le guide de publicités est un ensemble d'un identifiant de catégorie de publicités et de ses métadonnées de catégorie de publicités correspondantes.

5. Procédé selon la revendication 1, dans lequel le guide de publicités est un ensemble d'un identifiant de publicité et de ses métadonnées de publicité correspondantes ainsi que d'un identifiant de catégorie de publicités et de ses métadonnées de catégorie de publicités correspondantes.

6. Procédé selon la revendication 3, dans lequel la sélection, par le client de publicités (1), du poste spécifié du guide de publicités comprend :
la mise en correspondance (406), par le client de publicités (1), d'informations personnalisées de l'utilisateur avec les métadonnées de publicité dans le guide de publicités, et la sélection d'un poste spécifié correspondant aux informations personnalisées de l'utilisateur dans le guide de publicités.

7. Procédé selon la revendication 4 ou 5, dans lequel la sélection, par le client de publicités (1), du poste spécifié du guide de publicités comprend :
la mise en correspondance (802), par le client de publicités, d'informations personnalisées de l'utilisateur avec les métadonnées de catégorie de publicités dans le guide de publicités, la sélection d'un identifiant de catégorie de publicités correspondant aux informations personnalisées de l'utilisateur dans le guide de publicités, et la transmission d'une requête d'obtention de guide de publicités comportant l'identifiant de catégorie de publicités, au serveur de publicités ;
le renvoi (805), par le serveur de publicités, d'un identifiant de publicité et de métadonnées de publicité correspondant à l'identifiant de catégorie de publicités, au client de publicités ; et
la mise en correspondance (806), par le client de publicités, des informations personnalisées de l'utilisateur avec les métadonnées de publicité renvoyées par le serveur de publicités, et la sélection d'un poste spécifié correspondant aux informations personnalisées de l'utilisateur à partir de l'identifiant de publicité et des métadonnées de publicité renvoyées par le serveur de publicités.

8. Procédé selon la revendication 1, dans lequel durant la transmission du guide de publicités au client de diffusion (6) conforme aux informations de description en fonction des informations de description, le serveur de diffusion transmet (704) en outre des paramètres d'un canal de diffusion au client de diffusion conforme aux informations de description.

9. Système d'obtention de publicités comprenant :
un serveur de publicités (2), configuré pour transmettre un guide de publicités à un client de publicités (1), le guide de publicités comprenant plusieurs postes ; et
un client de publicités (1), configuré pour recevoir le guide de publicités, sélectionner un poste spécifié du guide de publicités, et obtenir et mémoriser des publicités correspondant au poste spécifié ; et
**caractérisé par**
un serveur de diffusion (5), connecté au serveur de publicités (2), et configuré pour recevoir le guide de publicités et des informations de description transmises par le serveur de publicités (2), et transmettre le guide de publicités à un client de diffusion (1) conforme aux informations de description en fonction des informations de description ; et
le client de diffusion (6), connecté respectivement au serveur de publicités (2) et au client de publicités (1), et configuré pour transmettre le guide de publicités reçu au client de publicités (1),
et en ce que ledit le client de publicités (1) est configuré pour obtenir des publicités correspondant au poste spécifié en transmettant une requête d'obtention de publicités comportant un identifiant de publicité dans le poste spécifié, au serveur de publicités ; et
en ce que le serveur de publicités (2) renvoie des publicités correspondant à l'identifiant de publicité dans le poste spécifié au client de publicités (1) par le biais du client de diffusion (6) et du serveur de diffusion (5).
